# EUROPEAN PATENT APPLICATION

(11) **EP 4 836 571 A1**
(43) Date of publication of application: **04.11.2026**
(21) Application number: 24910851.5
(22) Date of filing: 17.12.2024
(51) Int. Cl.: H04W 72/232

(54) **COMMUNICATION METHOD AND APPARATUS, AND COMPUTER-READABLE STORAGE MEDIUM**

(30) Priority: 26.12.2023 CN 202311815707
(71) Applicant: Beijing Unisoc Communications Technology Co., Ltd, Beijing 100083 (CN)
(72) Inventor: MA, Dawei, Beijing 100083 (CN)
(74) Representative: Cabinet Camus Lebkiri
(86) International application number: PCT/CN2024/140107
(87) International publication number: WO 2025/139920

(57) **Abstract**

The present application relates to the technical field of communications. Provided are a communication method and apparatus, and a computer-readable storage medium. The method comprises: a network device sending first information to a terminal, and correspondingly, the terminal receiving the first information, wherein the first information comprises first indication information and/or second indication information, the first indication information is used for determining at least one channel sounding reference signal resource, and the second indication information is used for determining a precoding matrix, and the terminal device using three antenna ports to send a physical uplink shared channel (PUSCH) on the basis of the precoding matrix, and correspondingly, the network device receiving the PUSCH, wherein the three antenna ports are antenna ports used for sending the at least one channel sounding reference signal resource. By means of the solution in the present disclosure, a terminal can be configured and scheduled to use three antenna ports to send a PUSCH.

## Description

The present disclosure claims the priority to the Chinese Patent Application No. 202311815707.3, filed to the China National Intellectual Property Administration on December 26, 2023, entitled "COMMUNICATION METHOD AND APPARATUS, AND COMPUTER-READABLE STORAGE MEDIUM", the entire content of which is incorporated herein by reference.

### TECHNICAL FIELD

The present disclosure relates to the technical field of communications, and specifically, to a communication method and apparatus, and a computer-readable storage medium.

### BACKGROUND

From the perspective of product development, in order to improve uplink transmission performance while reducing development difficulty as much as possible, a mobile device using 3 antenna ports is one of popular development directions at present. Although protocols support an uplink transmission with up to 8 antenna ports, the mobile device in the prior art generally uses only 1 or 2 uplink antenna ports. Existing protocols cannot support scheduling a terminal to use 3 antenna ports for an uplink transmission.

Therefore, there is an urgent need to provide an enhanced scheduling mechanism that can design scheduling of a terminal to use 3 antenna ports to send a physical uplink shared channel (Physical Uplink Shared Channel, PUSCH for short), so as to meet the requirement of the mobile device using 3 antenna ports.

### SUMMARY

The technical problem solved by the present disclosure is how to implement scheduling a terminal to use 3 antenna ports to send a PUSCH.

To solve the above technical problem, embodiments of the present disclosure provide a communication method, including: receiving first information, where the first information includes first indication information and/or second indication information, the first indication information is used to determine at least one channel sounding reference signal resource, and the second indication information is used to determine a precoding matrix; and sending a physical uplink shared channel by using 3 antenna ports according to the precoding matrix, where the 3 antenna ports are antenna ports used to send the at least one channel sounding reference signal resource.

Optionally, the first information includes the second indication information, and the method further includes: receiving second information, where the second information is used to configure the at least one channel sounding reference signal resource.

Optionally, the method further includes: receiving second information, where the second information is used to configure multiple candidate channel sounding reference signal resources, and the at least one channel sounding reference signal resource is selected from the multiple candidate channel sounding reference signal resources.

Optionally, the first indication information is used to determine the at least one channel sounding reference signal resource from the multiple candidate channel sounding reference signal resources.

Optionally, the candidate channel sounding reference signal resources include any one of: K1 single-port channel sounding reference signal resources, K1 being an integer greater than 3; K2 two-port channel sounding reference signal resources, K2 being an integer greater than 2; K3 two-port channel sounding reference signal resources and K4 single-port channel sounding reference signal resources, K3 and K4 being both integers greater than 1; and K5 four-port channel sounding reference signal resources, K5 being an integer greater than 1.

Optionally, the method further includes: receiving third information, where the third information is used to indicate that configuration information in the second information is used for three-antenna-port transmission.

Optionally, the at least one channel sounding reference signal resource includes any one of: 3 single-port channel sounding reference signal resources; 2 two-port channel sounding reference signal resources; 1 two-port channel sounding reference signal resource and 1 single-port channel sounding reference signal resource; and 1 four-port channel sounding reference signal resource.

Optionally, the precoding matrix is selected from a candidate precoding matrix set, and the candidate precoding matrix set includes at least one of: $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right], \frac{1}{\sqrt{3}}\left[\begin{matrix}1 & 0 & 0 \\ 0 & 1 & 0 \\ 0 & 0 & 1\end{matrix}\right]\right\}$ .

Optionally, the second indication information includes: a number of layers and a transmitted precoding matrix indicator, and the precoding matrix is determined according to the number of layers and the transmitted precoding matrix indicator jointly.

Optionally, a power scaling factor of the physical uplink shared channel is a ratio of a number of non-zero-power antenna ports for sending the physical uplink shared channel to 3.

To solve the above technical problem, the embodiments of the present disclosure further provide a communication method, including: sending first information, where the first information includes first indication information and/or second indication information, the first indication information is used to determine at least one channel sounding reference signal resource, and the second indication information is used to determine a precoding matrix; and receiving a physical uplink shared channel, where the physical uplink shared signal is sent by using 3 antenna ports according to the precoding matrix, and the 3 antenna ports are antenna ports used to send the at least one channel sounding reference signal resource.

Optionally, the first information includes the second indication information, and the method further includes: sending second information, where the second information is used to configure the at least one channel sounding reference signal resource.

Optionally, the method further includes: sending second information, where the second information is used to configure multiple candidate channel sounding reference signal resources, and the at least one channel sounding reference signal resource is selected from the multiple candidate channel sounding reference signal resources.

Optionally, the first indication information is used to determine the at least one channel sounding reference signal resource from the multiple candidate channel sounding reference signal resources.

Optionally, the candidate channel sounding reference signal resources include any one of: K1 single-port channel sounding reference signal resources, K1 being an integer greater than 3; K2 two-port channel sounding reference signal resources, K2 being an integer greater than 2; K3 two-port channel sounding reference signal resources and K4 single-port channel sounding reference signal resources, K3 and K4 being both integers greater than 1; and K5 four-port channel sounding reference signal resources, K5 being an integer greater than 1.

Optionally, the method further includes: sending third information, where the third information is used to indicate that configuration information in the second information is used for 3-antenna-port transmission.

Optionally, the at least one channel sounding reference signal resource includes any one of: 3 single-port channel sounding reference signal resources; 2 two-port channel sounding reference signal resources; 1 two-port channel sounding reference signal resource and 1 single-port channel sounding reference signal resource; and 1 four-port channel sounding reference signal resource.

Optionally, the precoding matrix is selected from a candidate precoding matrix set, and the candidate precoding matrix set includes at least one of: $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right], \frac{1}{\sqrt{3}}\left[\begin{matrix}1 & 0 & 0 \\ 0 & 1 & 0 \\ 0 & 0 & 1\end{matrix}\right]\right\}$ .

Optionally, the second indication information includes: a number of layers and a transmitted precoding matrix indicator, and the precoding matrix is determined according to the number of layers and the transmitted precoding matrix indicator jointly.

Optionally, a power scaling factor of the physical uplink shared channel is a ratio of a number of non-zero-power antenna ports for sending the physical uplink shared channel to 3.

To solve the above technical problem, the embodiments of the present disclosure further provide a communication apparatus, including: a receiving module, configured to receive first information, where the first information includes first indication information and/or second indication information, the first indication information is used to determine at least one channel sounding reference signal resource, and the second indication information is used to determine a precoding matrix; and a sending module, configured to send a physical uplink shared channel by using 3 antenna ports according to the precoding matrix, where the 3 antenna ports are antenna ports used to send the at least one channel sounding reference signal resource.

To solve the above technical problem, the embodiments of the present disclosure further provide a communication apparatus, including: a sending module, configured to send first information, where the first information includes first indication information and/or second indication information, the first indication information is used to determine at least one channel sounding reference signal resource, and the second indication information is used to determine a precoding matrix; and a receiving module, configured to receive a physical uplink shared channel, where the physical uplink shared signal is sent by using 3 antenna ports according to the precoding matrix, and the 3 antenna ports are antenna ports used to send the at least one channel sounding reference signal resource.

To solve the above technical problem, the embodiments of the present disclosure further provide a computer-readable storage medium, where the computer-readable storage medium is a non-volatile storage medium or a non-transitory storage medium, a computer program is stored thereon, and steps of the above methods are executed when the computer program is run on a computer.

To solve the above technical problem, the embodiments of the present disclosure further provide a communication apparatus, including a memory and a processor, where a computer program executable on the processor is stored in the memory, and the processor, upon executing the computer program, performs the steps of the above methods.

To solve the above technical problem, the embodiments of the present disclosure further provide a computer program product, where the computer program product includes a computer program, and when the computer program is run on a computer, the computer is enabled to perform the steps of the above methods.

To solve the above technical problem, the embodiments of the present disclosure further provide a communication system, including a network device and a terminal that are configured to perform the above methods.

To solve the above technical problem, the embodiments of the present disclosure further provide a chip (or a communication apparatus), where a computer program is stored on the chip, and when the computer program is executed on the chip, the steps of the above methods are implemented.

Compared with the prior art, the technical solutions of the embodiments of the present disclosure have the following beneficial effects.

This implementation provides a communication method, including: a network device sends first information to a terminal, and correspondingly, the terminal receives the first information, where the first information includes first indication information and/or second indication information, the first indication information is used to determine at least one channel sounding reference signal resource, and the second indication information is used to determine a precoding matrix; and the terminal device sends a physical uplink shared channel by using 3 antenna ports according to the precoding matrix, and correspondingly, the network device receives the physical uplink shared channel, where the 3 antenna ports are antenna ports used to send the at least one channel sounding reference signal resource.

Compared with the prior art that cannot support uplink scheduling of a 3-antenna terminal, this implementation implements the scheduling of the terminal to use 3 antenna ports to send a PUSCH, by enhancing uplink scheduling information, for example, carrying the first indication information and/or the second indication information in the first information, and by rationally designing the configuration of a channel sounding reference signal (Sounding Reference Signal, SRS for short) resource and a codebook (i.e., a precoding matrix) used for a 3-antenna-port transmission.

Furthermore, by this implementation, modifications to the protocol may be reduced, and scheduling of the terminal to use 3 antenna ports to send the PUSCH is implemented without enhancing the SRS resource (for example, without introducing the SRS resource for 3 antenna ports).

### BRIEF DESCRIPTION OF THE DRAWINGS

FIG. 1 is a signaling interaction diagram of a communication method in a first embodiment of the present disclosure.
FIG. 2 is a signaling interaction diagram of a communication method in a second embodiment of the present disclosure.
FIG. 3 is a structural schematic diagram of a communication apparatus in a third embodiment of the present disclosure.
FIG. 4 is a structural schematic diagram of a communication apparatus in a fourth embodiment of the present disclosure.
FIG. 5 is a structural schematic diagram of another communication apparatus in the embodiments of the present disclosure.

### DETAILED DESCRIPTION

The methods provided in the embodiments of the present disclosure involve a network device and a terminal, and uplink and downlink signal transmissions may be performed between the network device and the terminal.

A terminal in the embodiments of the present disclosure is a device having a wireless communication function, and may be referred to as user equipment (User Equipment, UE), a terminal device, a mobile station (MS), a mobile terminal (MT), an access terminal device, a vehicle-mounted terminal device, an industrial control terminal device, a UE unit, a UE station, a mobile station, a remote station, a remote terminal device, a mobile device, a UE terminal device, a wireless communication device, a UE agent, a UE apparatus, or the like. The terminal may be fixed or mobile. It should be noted that the terminal may support at least one wireless communication technology, such as long term evolution (Long Term Evolution, LTE for short), new radio (NR), and the like. For example, the terminal may be a mobile phone, a tablet computer (pad), a desktop computer, a notebook computer, an all-in-one machine, a vehicle-mounted terminal, a virtual reality (VR) terminal device, an augmented reality (AR) terminal device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, a cellular phone, a cordless phone, a session initiation protocol (SIP) phone, a wireless local loop (WLL) station, a personal digital assistant (PDA), a handheld device, a computing device or other processing devices connected to a wireless modem with a wireless communication function, a wearable device, a terminal device in a future mobile communication network, or a terminal device in a future evolved public land mobile network (PLMN), or the like. In some embodiments of the present disclosure, the terminal may also be an apparatus having a transceiving function, such as a chip system. Herein, the chip system may include a chip, and may further include other discrete devices.

In the embodiments of the present disclosure, a network device is a device that provides a wireless communication function for a terminal, and may also be referred to as an access network device, a radio access network (RAN) device, or an access network element, or the like. Herein, the network device may support at least one wireless communication technology, such as LTE, NR, and the like. For example, the network device includes but is not limited to: a next-generation base station (generation nodeB, gNB) in a fifth-generation mobile communication system (5th-generation, 5G), an evolved node B (eNB), a radio network controller (RNC), a node B (NB), a base station controller (BSC), a base transceiver station (BTS), a home base station (for example, home evolved node B, or home node B, HNB), a baseband unit (BBU), a transmitting and receiving point (TRP), a transmitting point (TP), a mobile switching center, and the like. The network device may further be a wireless controller, a centralized unit (CU), and/or a distributed unit (distributed unit, DU) in a cloud radio access network (CRAN) scenario, or the access network device may be a relay station, an access point, a vehicle-mounted device, a terminal device, a wearable device, a network device in future mobile communication, or a network device in a future evolved PLMN, or the like. In some embodiments, the network device may also be an apparatus having a function of providing wireless communication for a terminal, such as a chip system. For example, the chip system may include a chip, and may further include other discrete devices.

As described in the background, from the perspective of product development, in order to improve uplink transmission performance while reducing development difficulty as much as possible, it is considered to design a mobile device using 3 antenna ports. Correspondingly, a new radio (New Radio, NR for short, also referred to as new radio) protocol needs to design scheduling of a terminal to use 3 antenna ports to send a PUSCH. To more clearly illustrate the solutions of the present disclosure, an uplink scheduling process of an existing NR protocol is briefly introduced next.

Specifically, before scheduling a terminal to send a PUSCH, a base station first needs to measure an SRS sent from the terminal, and determine precoding used by the terminal to send the PUSCH. Herein, a number of antenna ports of the SRS supports 1, 2, 4 and 8. A method in which the base station schedules the terminal is to send uplink scheduling information to the terminal, where the uplink scheduling information may be higher-layer configured grant signaling or physical-layer downlink control information (Downlink Control Information, DCI for short).

Further, the uplink scheduling information includes an SRS resource indicator field, and a precoding information and number of layers (Precoding information and number of layers) indicator field. Herein, the SRS resource indicator field is used to indicate an SRS resource, and the number of antenna ports of the indicated SRS resource decides the number of antenna ports used to send the PUSCH. The precoding information and number of layers indicator field is used to indicate the number of layers of the PUSCH transmission and a transmitted precoding matrix indicator (TPMI) used, where the TPMI is used to indicate an index of a codebook in a codebook set, and the TPMI corresponds to a precoding matrix.

Table 1 is one of tables corresponding to the precoding information and number of layers indicator field in the 3GPP TS38.212 protocol. As shown in Table 1, for a terminal supporting a two-port coherent codebook transmission, when a value indicated by the field is 2, it indicates that the number of layers of the PUSCH transmission is 1, and TPMI=2.

**Table 1**

| Index corresponding to the bit field | Codebook subset = fully and partially non-coherent | Index corresponding to the bit field | Codebook subset = non-coherent |
|---|---|---|---|
| 0 | layer 1: TPMI=0 | 0 | layer 1: TPMI=0 |
| 1 | layer 1: TPMI=1 | 1 | layer 1: TPMI=1 |
| 2 | layer 1: TPMI=2 | | |
| 3 | layer 1: TPMI=3 | | |
| 4 | layer 1: TPMI=4 | | |
| 5 | layer 1: TPMI=5 | | |
| 6-7 | reserved | | |

According to the protocol, a precoding table corresponding to the case where the number of layers is 1 is shown in Table 2. By looking up the table, it can be known that the precoding matrix corresponding to TPMI=2 is $\frac{1}{\sqrt{2}} \left[\begin{matrix}1 \\ 1\end{matrix}\right]$.

**Table 2**

| **TPMI index** | *W* **( arranged from left to right in ascending order of TPMI indices)** | | | | | | | |
|---|---|---|---|---|---|---|---|---|
| 0 - 5 | $\frac{1}{\sqrt{2}} \left[\begin{matrix}1 \\ 0\end{matrix}\right]$ | $\frac{1}{\sqrt{2}} \left[\begin{matrix}0 \\ 1\end{matrix}\right]$ | $\frac{1}{\sqrt{2}} \left[\begin{matrix}1 \\ 1\end{matrix}\right]$ | $\frac{1}{\sqrt{2}} \left[\begin{matrix}1 \\ - 1\end{matrix}\right]$ | $\frac{1}{\sqrt{2}} \left[\begin{matrix}1 \\ j\end{matrix}\right]$ | $\frac{1}{\sqrt{2}} \left[\begin{matrix}1 \\ - j\end{matrix}\right]$ | - | - |

In addition, when a user sends a PUSCH, power scaling needs to be performed. Herein, a power scaling factor is equal to a ratio of a number of non-zero antenna ports used to send the PUSCH to a supported maximum number of ports of a SRS resource. Herein, the maximum number of ports of the SRS resource supported by the user reflects the maximum number of antenna ports.

Although the protocol supports an uplink transmission with up to 8 antenna ports, the mobile device in the prior art generally uses only 1 or 2 uplink antenna ports. In order to satisfy a terminal using 3 antenna ports while reducing modifications to the protocol, how to implement scheduling of a terminal to use 3 antenna ports to send a PUSCH without enhancing the SRS resource (i.e., without introducing a 3-port SRS resource) is a problem that needs to be solved.

To solve the above technical problem, this implementation provides a communication method, including: a network device sends first information to a terminal, and correspondingly, the terminal receives the first information, where the first information includes first indication information and/or second indication information, the first indication information is used to determine at least one channel sounding reference signal resource, and the second indication information is used to determine a precoding matrix; and the terminal device sends a physical uplink shared channel by using 3 antenna ports according to the precoding matrix, and correspondingly, the network device receives the physical uplink shared channel, where the 3 antenna ports are antenna ports used to send the at least one channel sounding reference signal resource.

This implementation implements the scheduling of the terminal to use 3 antenna ports to send a PUSCH, by enhancing uplink scheduling information, for example, carrying the first indication information and/or the second indication information in the first information, and by rationally designing the configuration of a channel sounding reference signal (Sounding Reference Signal, SRS for short) resource and a codebook (i.e., a precoding matrix) used for a 3-antenna-port transmission.

To enable the above purposes, features and beneficial effects of the present disclosure to be more apparent and understandable, the specific embodiments of the present disclosure are described in detail below with reference to the drawings.

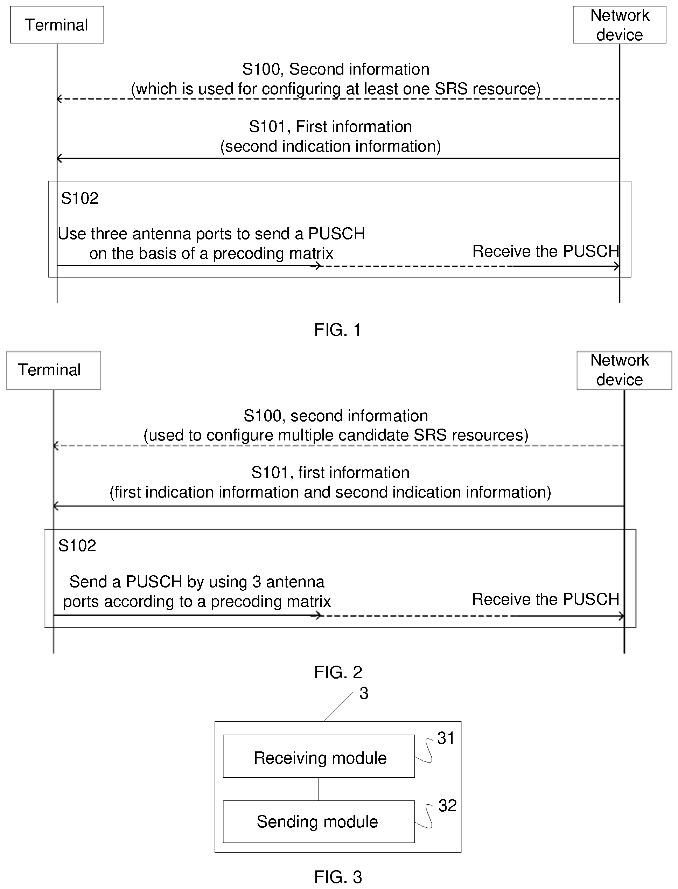

FIG. 1 is a signaling interaction diagram of a communication method in a first embodiment of the present disclosure.

This implementation may be applied to an uplink scheduling scenario, and in this scenario, the terminal has a capability of performing an uplink transmission by using 3 antenna ports. Further, the terminal scheduled to perform this implementation may preferably be a mobile device.

In a specific implementation, actions performed by the terminal in the communication method provided in the following steps (abbreviated as S) 101 to S102 may be performed by a chip having a communication function in the terminal, or may be performed by a baseband chip in the terminal. Actions performed by the network device may be performed by a chip having a communication function in the network device, or may be performed by a baseband chip in the network device.

Specifically, referring to FIG. 1, the communication method of this implementation may include the following steps.

In S101: a network device sends first information to a terminal. Correspondingly, the terminal receives the first information from the network device. The first information may include first indication information and/or second indication information (FIG. 1 exemplarily illustrates a case where the first information includes the second indication information). Herein, the first indication information is used to determine at least one SRS resource, and the second indication information is used to determine a precoding matrix.

Further, the first information may also be referred to as uplink scheduling information, and is used to schedule the terminal to send a PUSCH.

In some embodiments, the first information may include an x-bit first indicator field, used to carry the first indication information. Herein, x≥0 and is an integer. The first indicator field may correspond to an SRS resource indicator field (SRS indicator, SRI).

In some embodiments, the first information may include a y-bit second indicator field, used to carry the second indication information. Herein, y is a positive integer. The second indication information may include a number of layers and a transmitted precoding matrix indicator, the precoding matrix is determined according to the number of layers and the transmitted precoding matrix indicator jointly, and the number of layers specifically refers to a number of layers of the precoding matrix. In other words, the second indicator field may correspond to a precoding information and number of layers indicator field.

In a specific implementation, the first information may be carried by higher-layer configured grant signaling, for example, carried by RRC (radio resource control). Alternatively, the first information may be carried by physical layer DCI.

**In** a specific implementation, the first information may not include the first indication information, but include only the second indication information, as shown in FIG. 1. In other words, the first indicator field may be 0 bits.

Further, before performing S101, the communication method of this implementation may further include S100: the network device sends second information to the terminal. Correspondingly, the terminal receives the second information. Herein, the second information is used to configure at least one SRS resource. Thus, before receiving the uplink scheduling information sent from the network device, the terminal further receives an SRS resource set configured by the network device, which has a usage of codebook transmission measurement, where the SRS resource set includes at least one SRS resource.

In some embodiments, the at least one SRS resource may include any one of: 3 single-port SRS resources; 2 two-port SRS resources; 1 two-port SRS resource and 1 single-port SRS resource; and 1 four-port SRS resource.

Specifically, in S100, the network device configures one of the above four possible combinations for the terminal through the second information, and the configured antenna ports (combination) of the SRS resource have no redundancy substantially.

Further, different from the fact that the existing SRI must have 2 bits to indicate one of multiple configured SRS resources, the first indicator field (i.e., the SRI field) in the first information of this specific implementation may be 0 bits, because all of the configured at least one SRS resource is to be used to send the PUSCH. Thus, in this specific implementation, the first information only indicates the precoding matrix by the precoding information and number of layers indicator field.

In a specific implementation, continuing to refer to FIG. 1, the communication method of this implementation may further include S102, the terminal sends a PUSCH by using 3 antenna ports according to the precoding matrix. Correspondingly, the network device receives the PUSCH. Herein, the 3 antenna ports are antenna ports used to send the at least one SRS resource.

Specifically, the 3 antenna ports may be non-coherent.

Further, the precoding matrix may be selected from a candidate precoding matrix set, and the candidate precoding matrix set includes at least one of: $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right], \frac{1}{\sqrt{3}}\left[\begin{matrix}1 & 0 & 0 \\ 0 & 1 & 0 \\ 0 & 0 & 1\end{matrix}\right]\right\}$ . Thus, a 3-port precoding matrix is determined by the second indication information, and the PUSCH is then sent by using the precoding matrix.

For example, the candidate precoding matrix set may be defined by the following Table 3, by predefinition or preconfiguration:

**Table 3**

| TPMI index | W (arranged from left to right in ascending order of TPMI indices) | | | |
|---|---|---|---|---|
| 0-3 | $\frac{1}{\sqrt{3}} \left[\begin{matrix}1 \\ 0 \\ 0\end{matrix}\right]$ | $\frac{1}{\sqrt{3}} \left[\begin{matrix}0 \\ 1 \\ 0\end{matrix}\right]$ | $\frac{1}{\sqrt{3}} \left[\begin{matrix}0 \\ 0 \\ 1\end{matrix}\right]$ | $\frac{1}{\sqrt{3}} \left[\begin{matrix}1 & 0 \\ 0 & 1 \\ 0 & 0\end{matrix}\right]$ |
| 4-6 | $\frac{1}{\sqrt{3}} \left[\begin{matrix}1 & 0 \\ 0 & 0 \\ 0 & 1\end{matrix}\right]$ | $\frac{1}{\sqrt{3}} \left[\begin{matrix}0 & 0 \\ 1 & 0 \\ 0 & 1\end{matrix}\right]$ | $\frac{1}{\sqrt{3}} \left[\begin{matrix}1 & 0 & 0 \\ 0 & 1 & 0 \\ 0 & 0 & 1\end{matrix}\right]$ | - |

In Table 3, candidate precoding matrices with different numbers of layers are integrated into a table for configuration.

In response to receiving the first information, the terminal determines a precoding matrix used to send a PUSCH this time, according to the **TPMI** index indicated by the second indication information in the first information. For example, it is assumed that code points of the second indicator field in the first information is 000, a corresponding TPMI index is 0, correspondingly, the preset precoding matrix used this time is $\frac{1}{\sqrt{3}} \left[\begin{matrix}1 \\ 0 \\ 0\end{matrix}\right]$. For another example, it is assumed that code points of the second indicator field in the first information is 100, a corresponding TPMI index is 4, correspondingly, the precoding matrix used when sending the PUSCH in S102 is $\frac{1}{\sqrt{3}} \left[\begin{matrix}1 & 0 \\ 0 & 0 \\ 0 & 1\end{matrix}\right]$.

In a variation, candidate precoding matrices with the same number of layers may be integrated into a table, and candidate precoding matrices with different numbers of layers may be defined in different tables. Further, all the defined tables are indicated to the terminal in advance, by preconfiguration or predefinition.

For example, the following Table 4 to Table 6 may be predefined.

**Table 4**

| TPMI index | W (arranged from left to right in ascending order of TPMI indices) | | | |
|---|---|---|---|---|
| 0 - 2 | $\frac{1}{\sqrt{3}} \left[\begin{matrix}1 \\ 0 \\ 0\end{matrix}\right]$ | $\frac{1}{\sqrt{3}} \left[\begin{matrix}0 \\ 1 \\ 0\end{matrix}\right]$ | $\frac{1}{\sqrt{3}} \left[\begin{matrix}0 \\ 0 \\ 1\end{matrix}\right]$ | - |

Table 4 corresponds to the candidate precoding matrices when the number of layers is 1.

**Table 5**

| TPMI index | W (arranged from left to right in ascending order of TPMI indices) | | | |
|---|---|---|---|---|
| 0 - 2 | $\frac{1}{\sqrt{3}} \left[\begin{matrix}1 & 0 \\ 0 & 1 \\ 0 & 0\end{matrix}\right]$ | $\frac{1}{\sqrt{3}} \left[\begin{matrix}1 & 0 \\ 0 & 0 \\ 0 & 1\end{matrix}\right]$ | $\frac{1}{\sqrt{3}} \left[\begin{matrix}0 & 0 \\ 1 & 0 \\ 0 & 1\end{matrix}\right]$ | - |

Table 5 corresponds to the candidate precoding matrices when the number of layers is 2.

**Table 6**

| TPMI index | W (arranged from left to right in ascending order of TPMI indices) | | | |
|---|---|---|---|---|
| 0 | $\frac{1}{\sqrt{3}} \left[\begin{matrix}1 & 0 & 0 \\ 0 & 1 & 0 \\ 0 & 0 & 1\end{matrix}\right]$ | - | - | - |

Table 6 corresponds to the candidate precoding matrices when the number of layers is 3.

In response to receiving the first information, the terminal determines the precoding matrix used to send the PUSCH this time, according to the TPMI index and the number of layers indicated by the second indication information in the first information. For example, it is assumed that code points of the second indicator field in the first information correspond to TPMI=0 and the number of layers=1 (for example, which may be determined by looking up Table 1), correspondingly, by looking up Table 4, it may be determined that the precoding matrix used this time is $\frac{1}{\sqrt{3}} \left[\begin{matrix}1 \\ 0 \\ 0\end{matrix}\right]$. For another example, it is assumed that the code points of the second indicator field in the first information correspond to TPMI=2 and the number of layers =2, correspondingly, by looking up Table 5, it may be determined that the precoding matrix used when sending the PUSCH in S102 is $\frac{1}{\sqrt{3}} \left[\begin{matrix}0 & 0 \\ 1 & 0 \\ 0 & 1\end{matrix}\right]$.

In some embodiments, if the at least one SRS resource configured by the first information is 3 single-port SRS resources, each single-port SRS resource may correspond one-to-one to an antenna port of the terminal. Further, in S102, the 3 antenna ports of the terminal respectively send the PUSCH by using the corresponding single-port SRS resources.

In some embodiments, if the at least one SRS resource configured by the first information is 2 two-port SRS resources, the ports of first three SRS resources may correspond one-to-one to 3 antenna ports of the terminal, and there is no restriction on an antenna port of the terminal corresponding to a port of a fourth SRS resource. For example, in S102, a first one of the 2 two-port SRS resources may be used by two antenna ports of the terminal to send the PUSCH, and the remaining two-port SRS resource may be used by two antenna ports of the terminal to send the PUSCH in a time division multiplexing manner.

In some embodiments, if the at least one SRS resource configured by the first information is 1 two-port SRS resource and 1 single-port SRS resource, ports of the three SRS resources may correspond one-to-one to 3 antenna ports of the terminal.

In some embodiments, if the at least one SRS resource configured by the first information is 1 four-port SRS resource, a fourth SRS resource port does not send the PUSCH.

In a specific implementation, in S102, a power scaling factor of the PUSCH is a ratio of a number of non-zero-power antenna ports used to send the PUSCH to 3.

In a specific implementation, before/after/simultaneously with S100, the communication method of this implementation may further include a step of: sending, by the network device, third information to the terminal. Correspondingly, the terminal receives the third information. The third information is used to indicate that the configuration information in the second information is used for a 3-antenna-port transmission.

Specifically, before the network sends the uplink scheduling information to the terminal, the terminal may be preferably configured to send a PUCCH by using 3 antenna ports.

In some embodiments, the terminal may actively report a terminal capability. In response to the terminal reporting that it supports a 3-antenna-port transmission, the network indicates that the SRS resource and the codebook configured by the second information are used for the 3-antenna-port transmission.

In some embodiments, a new parameter in a configuration parameter of an SRS resource set, used to indicate that the SRS resource set is used for the 3-antenna-port transmission, may be added in the second information.

From the above, by this implementation, scheduling of the terminal to use 3 antenna ports to send a PUSCH is implemented, by enhancing uplink scheduling information, for example, carrying the first indication information and/or the second indication information in the first information, and by rationally designing the configuration of the channel sounding reference signal (Sounding Reference Signal, SRS for short) resource and the codebook (i.e., precoding matrix) used for the 3-antenna-port transmission. Further, by this implementation, modifications to the protocol may be reduced, and scheduling of the terminal to use 3 antenna ports to send a PUSCH is implemented without enhancing the SRS resource (for example, without introducing an SRS resource for 3 antenna ports).

FIG. 2 is a signaling interaction diagram of a communication method in a second embodiment of the present disclosure. Herein, only differences between the second embodiment and the first embodiment shown in FIG. 1 above are mainly described.

Specifically, referring to FIG. 2, the main differences between this implementation and the communication method shown in FIG. 1 above include: in S100, the second information sent from the network device to the terminal is used to configure multiple candidate SRS resources. Herein, the at least one SRS resource is selected from the multiple candidate SRS resources.

In some embodiments, the candidate SRS resources include any one of: K1 single-port SRS resources (denoted as SRS resource set 1), K1 being an integer greater than 3; K2 two-port SRS resources (denoted as SRS resource set 2), K2 being an integer greater than 2; K3 two-port SRS resources and K4 single-port SRS resources (denoted as SRS resource set 3), K3 and K4 being both integers greater than 1; and K5 four-port SRS resources (denoted as SRS resource set 4), K5 being an integer greater than 1.

That is, compared with the method for the SRS resource set configuration of 3 single-port SRS resources, 2 two-port SRS resources, 1 two-port SRS resource and 1 single-port SRS resource, and 1 four-port SRS resource in the embodiments shown in FIG. 1 above, the number of antenna ports of all SRS resources in a single SRS resource set in this embodiment is redundantly configured.

Further, continuing to refer to FIG. 2, the main differences between this implementation and the communication method shown in FIG. 1 above further include: in S101, the first information includes the first indication information and the second indication information. Herein, the first indication information is used to determine the at least one SRS resource from the multiple candidate SRS resources.

In some embodiments, the first indication information may indicate a first SRS resource selected this time in a candidate SRS resource set. For example, it is assumed that K1=6, that is, the SRS resource set 1 includes SRS resource 0 to SRS resource 5, the first indication information may indicate the first SRS resource in the SRS resource set 1, and correspondingly, the terminal may determine that the SRS resources used in S102 are SRS resource 0 to SRS resource 2. For another example, it is assumed that K3=2 and K4=2, that is, the SRS resource set 3 may include two-port SRS resource 0 to two-port SRS resource 1, and single-port SRS resource 2 to single-port SRS resource 3, and the first indication information may indicate the second SRS resource in the SRS resource set 3, and correspondingly, the terminal may determine that the SRS resources used in S102 are the two-port SRS resource 1 and single-port SRS resource 2.

In some embodiments, the first indication information may indicate all selected SRS resources. For example, it is assumed that K2=3, that is, the SRS resource set 2 includes two-port SRS resource 0 to SRS resource 2, and the first indication information may indicate that the SRS resource 0 and SRS resource 2 in the SRS resource set 2 are used for the PUSCH transmission this time.

In a common variation of the embodiments shown in FIG. 1 and FIG. 2 above, the first information may include only the first indication information, but not include the second indication information. Specifically, the precoding matrix used when the terminal performs the 3-antenna-port transmission may be indicated to the terminal by predefinition or preconfiguration. Correspondingly, in S101, only the first indicator field may be used to indicate the at least one SRS resource used when the terminal uses 3 antenna ports to send the PUSCH.

FIG. 3 is a structural schematic diagram of a communication apparatus 3 in a third embodiment of the present disclosure. Those skilled in the art understand that the communication apparatus 3 of this embodiment may be used to implement the methods in the embodiments shown in FIG. 1 and FIG. 2 above. The communication apparatus 3 may be the terminal described above.

Specifically, referring to FIG. 3, the communication apparatus 3 may include: a receiving module 31, configured to receive first information, where the first information includes first indication information and/or second indication information, the first indication information is used to determine at least one channel sounding reference signal resource, and the second indication information is used to determine a precoding matrix; and a sending module 32, configured to send a physical uplink shared channel by using 3 antenna ports according to the precoding matrix, where the 3 antenna ports are antenna ports used to send the at least one channel sounding reference signal resource.

In a specific implementation, the first information includes the second indication information, and the communication apparatus 3 further includes: a first receiving unit, configured to receive second information, where the second information is used to configure the at least one channel sounding reference signal resource.

In a specific implementation, the communication apparatus 3 further includes: a second receiving unit, configured to receive second information, where the second information is used to configure multiple candidate channel sounding reference signal resources, and the at least one channel sounding reference signal resource is selected from the multiple candidate channel sounding reference signal resources.

In a specific implementation, the first indication information is used to determine the at least one channel sounding reference signal resource from the multiple candidate channel sounding reference signal resources.

In a specific implementation, the candidate channel sounding reference signal resources include any one of: K1 single-port channel sounding reference signal resources, K1 being an integer greater than 3; K2 two-port channel sounding reference signal resources, K2 being an integer greater than 2; K3 two-port channel sounding reference signal resources and K4 single-port channel sounding reference signal resources, K3 and K4 being both integers greater than 1; and K5 four-port channel sounding reference signal resources, K5 being an integer greater than 1.

In a specific implementation, the communication apparatus 3 further includes: a third receiving unit, configured to receive third information, where the third information is used to indicate that configuration information in the second information is used for three-antenna-port transmission.

In aspecific implementation, the at least one channel sounding reference signal resource includes any one of: 3 single-port channel sounding reference signal resources; 2 two-port channel sounding reference signal resources; 1 two-port channel sounding reference signal resource and 1 single-port channel sounding reference signal resource; and 1 four-port channel sounding reference signal resource.

In a specific implementation, the precoding matrix is selected from a candidate precoding matrix set, and the candidate precoding matrix set includes at least one of: $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right], \frac{1}{\sqrt{3}}\left[\begin{matrix}1 & 0 & 0 \\ 0 & 1 & 0 \\ 0 & 0 & 1\end{matrix}\right]\right\}$ .

In a specific implementation, the second indication information includes: a number of layers and a transmitted precoding matrix indicator, and the precoding matrix is determined according to the number of layers and the transmitted precoding matrix indicator jointly.

In a specific implementation, a power scaling factor of the physical uplink shared channel is a ratio of a number of non-zero-power antenna ports for sending the physical uplink shared channel to 3.

For more contents on the operation principle and operation mode of the communication apparatus 3, reference may be made to the related description in FIG. 1 and FIG. 2 above, which are not repeated here.

In a specific implementation, the above communication apparatus 3 may correspond to a chip having a communication function in the terminal, or correspond to a chip having a data processing function, such as a system-on-a-chip (System-On-a-Chip, SOC for short), a baseband chip, or the like; or correspond to a chip module that includes a chip having a communication function, in the terminal; or correspond to a chip module having a chip with a data processing function, or correspond to the terminal.

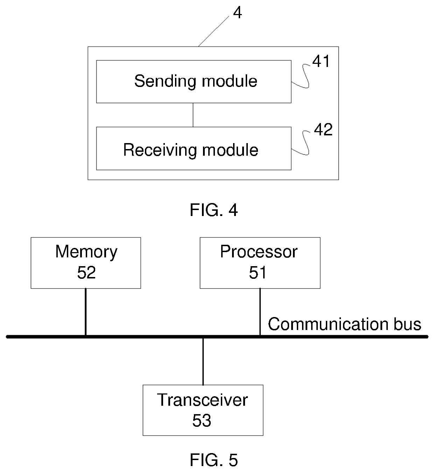

FIG. 4 is a structural schematic diagram of a communication apparatus 4 in a fourth embodiment of the present disclosure. Those skilled in the art understand that the communication apparatus 4 of this embodiment may be used to implement the methods in the embodiments shown in FIG. 1 and FIG. 2 above. The communication apparatus 4 may be the network device described above.

Specifically, referring to FIG. 4, the communication apparatus 4 may include: a sending module 41, configured to send first information, where the first information includes first indication information and/or second indication information, the first indication information is used to determine at least one channel sounding reference signal resource, and the second indication information is used to determine a precoding matrix; and a receiving module 42, configured to receive a physical uplink shared channel, where the physical uplink shared signal is sent by using 3 antenna ports according to the precoding matrix, and the 3 antenna ports are antenna ports used to send the at least one channel sounding reference signal resource.

In a specific implementation, the first information includes the second indication information, and the communication apparatus 4 further includes: a first sending unit, configured to send second information, where the second information is used to configure the at least one channel sounding reference signal resource.

In a specific implementation, the communication apparatus 4 further includes: a second transmitting unit, configured to send second information, where the second information is used to configure multiple candidate channel sounding reference signal resources, and the at least one channel sounding reference signal resource is selected from the multiple candidate channel sounding reference signal resources.

In a specific implementation, the first indication information is used to determine the at least one channel sounding reference signal resource from the multiple candidate channel sounding reference signal resources.

In a specific implementation, the candidate channel sounding reference signal resources include any one of: K1 single-port channel sounding reference signal resources, K1 being an integer greater than 3; K2 two-port channel sounding reference signal resources, K2 being an integer greater than 2; K3 two-port channel sounding reference signal resources and K4 single-port channel sounding reference signal resources, K3 and K4 being both integers greater than 1; and K5 four-port channel sounding reference signal resources, K5 being an integer greater than 1.

In a specific implementation, the communication apparatus 4 further includes: a third sending unit, configured to send third information, where the third information is used to indicate that configuration information in the second information is used for 3-antenna-port transmission.

In aspecific implementation, the at least one channel sounding reference signal resource includes any one of: 3 single-port channel sounding reference signal resources; 2 two-port channel sounding reference signal resources; 1 two-port channel sounding reference signal resource and 1 single-port channel sounding reference signal resource; and 1 four-port channel sounding reference signal resource.

In a specific implementation, the precoding matrix is selected from a candidate precoding matrix set, and the candidate precoding matrix set includes at least one of: $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right], \frac{1}{\sqrt{3}}\left[\begin{matrix}1 & 0 & 0 \\ 0 & 1 & 0 \\ 0 & 0 & 1\end{matrix}\right]\right\}$ .

In a specific implementation, the second indication information includes: a number of layers and a transmitted precoding matrix indicator, and the precoding matrix is determined according to the number of layers and the transmitted precoding matrix indicator jointly.

In a specific implementation, a power scaling factor of the physical uplink shared channel is a ratio of a number of non-zero-power antenna ports for sending the physical uplink shared channel to 3.

For more contents on the operation principle and operation mode of the communication apparatus 4, reference may be made to the related description in FIG. 1 and FIG. 2 above, which are not repeated here.

In a specific implementation, the above communication apparatus 4 may correspond to a chip having a communication function in the network device, or correspond to a chip having a data processing function, such as a system-on-a-chip (System-On-a-Chip, SOC for short), a baseband chip, or the like; or correspond to a chip module that includes a chip having a communication function, in the network device; or correspond to a chip module having a chip with a data processing function, or correspond to the network device.

In a specific implementation, regarding each module/unit included in each apparatus and product described in the above embodiments, it may be a software module/unit or a hardware module/unit, or may partly be a software module/unit and partly be a hardware module/unit.

For example, for each apparatus and product applied to or integrated in a chip, each module/unit included therein may all be implemented by hardware such as a circuit, or at least some of the modules/units may be implemented by a software program, where the software program is run on a processor integrated inside the chip, and the remaining modules/units (if any) may be implemented by hardware such as a circuit; for each apparatus and product applied to or integrated in a chip module, each module/unit included therein may all be implemented by hardware such as a circuit, and different modules/units may be located in the same component (such as chip, circuit module, etc.) or different components of the chip module, or at least some of the modules/units may be implemented by a software program, where the software program is run on a processor integrated inside the chip module, and the remaining modules/units (if any) may be implemented by hardware such as a circuit; for each apparatus and product applied to or integrated in the terminal, each module/unit included therein may all be implemented by hardware such as a circuit, and different modules/units may be located in the same component (such as chip, circuit module, etc.) or different components of the terminal, or at least a part of the modules/units may be implemented by a software program, where the software program is run on a processor integrated inside the terminal, and the remaining modules/units (if any) may be implemented by hardware such as a circuit.

The embodiments of the present disclosure further provide a computer-readable storage medium, where the computer-readable storage medium is a non-volatile storage medium or a non-transitory storage medium, a computer program is stored thereon, and when the computer program is run by a processor, the steps of the communication methods provided in the embodiments shown in FIG. 1 and FIG. 2 above are performed.

In the embodiments of the present disclosure, the storage medium may include a non-volatile memory or non-transitory memory, and may further include an optical disc, a mechanical hard disk, a solid-state drive, or the like.

FIG. 5 is a structural schematic diagram of another communication apparatus in the embodiments of the present disclosure.

Specifically, referring to FIG. 5, the communication apparatus may include a processor 51, where the processor 51 is coupled to a memory 52, and the memory 52 may be located inside the apparatus or outside the apparatus. Optionally, it further includes a transceiver 53. The memory 52, the processor 51 and the transceiver 53 may be connected through a communication bus. A computer program executable on the processor 51 is stored in the memory 52, and the processor 51, upon executing the computer program, performs the steps in the communication methods provided in the embodiments shown in FIG. 1 and FIG. 2 above, and the transceiver 53 may perform the sending and/or receiving actions described above under the control of the processor 51. The communication apparatus may be the network device or the terminal described above.

In the embodiments of the present disclosure, the memory 52 includes a non-volatile or non-transitory memory, and may further include an optical disc, a mechanical hard disk, a solid-state drive, or the like.

In the embodiments of the present disclosure, the processor 51 may be a central processing unit (CPU), and the processor 51 may further be another general-purpose processor, a digital signal processor (DSP), an application specific integrated circuit (ASIC), a field programmable gate array (FPGA), or other programmable logic device, discrete gate or transistor logic device, discrete hardware component, or the like. The general-purpose processor may be a microprocessor, or the processor may also be any conventional processor or the like.

Those ordinary skilled in the art may understand that all or a part of the steps in the various methods of the above embodiments may be completed through a program indicating related hardware, where the program may be stored in a computer-readable storage medium, and the storage medium may include: ROM, RAM, a magnetic disk, an optical disc, or the like.

The description of the embodiments in the present disclosure is described with reference to flowcharts and/or block diagrams of the methods, devices (apparatuses), and computer program products according to the embodiments of the present disclosure. It should be understood that each flow and/or block in the flowcharts and/or block diagrams, and combinations of flows and/or blocks in the flowcharts and/or block diagrams, may be implemented by computer program instructions. These computer program instructions may be provided to a processor of a general-purpose computer, a special-purpose computer, an embedded processor, or other programmable data processing devices, to produce a machine, such that instructions executed by the processor of the computer or other programmable data processing devices produce an apparatus for implementing the functions specified in a flow or multiple flows in the flowcharts and/or a block or multiple blocks in the block diagrams.

These computer program instructions may also be stored in a computer-readable memory that can guide a computer or other programmable data processing devices to operate in a specific manner, such that the instructions stored in the computer-readable memory produce a manufactured product including an instruction apparatus, and the instruction apparatus implements the functions specified in a flow or multiple flows in the flowcharts and/or a block or multiple blocks in the block diagrams.

These computer program instructions may also be loaded onto a computer or other programmable data processing devices, such that a series of operation steps are performed on the computer or other programmable devices to produce computer-implemented processing, and thus the instructions executed on the computer or other programmable devices provide steps for implementing the functions specified in a flow or multiple flows in the flowcharts and/or a block or multiple blocks in the block diagrams.

It should also be noted that, in the embodiments of the present disclosure, "at least one" refers to one or more, and "multiple/plurality of" refers to two or more. "And/or" describes an association relationship of associated objects, indicating that three relationships may exist, for example, A and/or B may indicate the cases where A exists alone, A and B exist simultaneously, and B exists alone. Herein, A and B may be singular or plural. The character "/" generally indicates that the associated objects before and after "/" are in an "or" relationship. "At least one of" and similar expressions refer to any combination of these items, including any combination of a singular item or plural items. For example, at least one of a, b and c may represent: a, b, c, a and b, a and c, b and c, or a, b and c, where a, b, c may be single or multiple.

In the embodiments of the present disclosure, the terms "include", "comprise" or any other variants thereof are intended to cover non-exclusive inclusion, so that a process, method, commodity or device including a series of elements not only includes those elements, but also includes other elements not explicitly listed, or further includes elements inherent to such a process, method, commodity or device. Without more restrictions, an element defined by the statement "including a/one ..." does not exclude the existence of other same elements in the process, method, commodity or device including the element.

The present disclosure may be described in the general context of computer-executable instructions executed by a computer, such as a program module. Generally, the program module includes a routine, program, object, component, data structure, etc., that performs a specific task or implements a specific abstract data type. The present disclosure may also be practiced in a distributed computing environment, and in the distributed computing environment, tasks are performed by remote processing devices connected through a communication network. In the distributed computing environment, the program module may be located in local including the storage device and a remote computer storage medium.

Each embodiment in the present disclosure is described in a progressive manner, and the same and similar parts between the various embodiments may be referred to each other, and each embodiment focuses on the differences from other embodiments. In particular, for the apparatus embodiments, since they are basically similar to the method embodiments, the description is relatively simple, and for the relevant parts, reference may be made to the partial description of the method embodiments.

Those ordinary skilled in the art may realize that the units and algorithm steps of each example described in conjunction with the embodiments disclosed herein may be implemented by electronic hardware, computer software, or a combination thereof. Whether these functions are performed by hardware or software depends on the specific applications and design constraints of the technical solutions. Professional technicians may use different methods for each specific application to implement the described function, but such an implementation should not be considered beyond the scope of the present disclosure.

Those skilled in the art may clearly understand that, for the convenience and brevity of the description, for the specific operating processes of the apparatus, devices and units described above, reference may be made to the corresponding processes in the foregoing method embodiments, which are not repeated here.

Although the present disclosure is disclosed as above, the present disclosure is not limited thereto. Any skilled in the art may make various changes and modifications without departing from the spirit and scope of the present disclosure, and therefore, the protection scope of the present disclosure shall be based on the scope defined by the claims.

## Claims

1. A communication method, comprising:
receiving first information, wherein the first information comprises first indication information and/or second indication information, the first indication information is used to determine at least one channel sounding reference signal resource, and the second indication information is used to determine a precoding matrix; and
sending a physical uplink shared channel by using 3 antenna ports according to the precoding matrix, wherein the 3 antenna ports are antenna ports used to send the at least one channel sounding reference signal resource.

2. The method according to claim 1, wherein the first information comprises the second indication information, and the method further comprises:
receiving second information, wherein the second information is used to configure the at least one channel sounding reference signal resource.

3. The method according to claim 1, further comprising:
receiving second information, wherein the second information is used to configure multiple candidate channel sounding reference signal resources, and the at least one channel sounding reference signal resource is selected from the multiple candidate channel sounding reference signal resources.

4. The method according to claim 3, wherein the first indication information is used to determine the at least one channel sounding reference signal resource from the multiple candidate channel sounding reference signal resources.

5. The method according to claim 3 or 4, wherein the candidate channel sounding reference signal resources comprise any one of: K1 single-port channel sounding reference signal resources, K1 being an integer greater than 3; K2 two-port channel sounding reference signal resources, K2 being an integer greater than 2; K3 two-port channel sounding reference signal resources and K4 single-port channel sounding reference signal resources, K3 and K4 being both integers greater than 1; and K5 four-port channel sounding reference signal resources, K5 being an integer greater than 1.

6. The method according to any one of claims 2 to 5, further comprising:
receiving third information, wherein the third information is used to indicate that configuration information in the second information is used for three-antenna-port transmission.

7. The method according to any one of claims 1 to 6, wherein the at least one channel sounding reference signal resource comprises any one of: 3 single-port channel sounding reference signal resources; 2 two-port channel sounding reference signal resources; 1 two-port channel sounding reference signal resource and 1 single-port channel sounding reference signal resource; and 1 four-port channel sounding reference signal resource.

8. The method according to any one of claims 1 to 7, wherein the precoding matrix is selected from a candidate precoding matrix set, and the candidate precoding matrix set comprises at least one of: $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right], \frac{1}{\sqrt{3}}\left[\begin{matrix}1 & 0 & 0 \\ 0 & 1 & 0 \\ 0 & 0 & 1\end{matrix}\right]\right\}$ .

9. The method according to any one of claims 1 to 8, wherein the second indication information comprises: a number of layers and a transmitted precoding matrix indicator, and the precoding matrix is determined according to the number of layers and the transmitted precoding matrix indicator jointly.

10. The method according to any one of claims 1 to 9, wherein a power scaling factor of the physical uplink shared channel is a ratio of a number of non-zero-power antenna ports for sending the physical uplink shared channel to 3.

11. A communication method, comprising:
sending first information, wherein the first information comprises first indication information and/or second indication information, the first indication information is used to determine at least one channel sounding reference signal resource, and the second indication information is used to determine a precoding matrix; and
receiving a physical uplink shared channel, wherein the physical uplink shared signal is sent by using 3 antenna ports according to the precoding matrix, and the 3 antenna ports are antenna ports used to send the at least one channel sounding reference signal resource.

12. The method according to claim 11, wherein the first information comprises the second indication information, and the method further comprises:
sending second information, wherein the second information is used to configure the at least one channel sounding reference signal resource.

13. The method according to claim 11, further comprising:
sending second information, wherein the second information is used to configure multiple candidate channel sounding reference signal resources, and the at least one channel sounding reference signal resource is selected from the multiple candidate channel sounding reference signal resources.

14. The method according to claim 13, wherein the first indication information is used to determine the at least one channel sounding reference signal resource from the multiple candidate channel sounding reference signal resources.

15. The method according to claim 13 or 14, wherein the candidate channel sounding reference signal resources comprise any one of: K1 single-port channel sounding reference signal resources, K1 being an integer greater than 3; K2 two-port channel sounding reference signal resources, K2 being an integer greater than 2; K3 two-port channel sounding reference signal resources and K4 single-port channel sounding reference signal resources, K3 and K4 being both integers greater than 1; and K5 four-port channel sounding reference signal resources, K5 being an integer greater than 1.

16. The method according to any one of claims 12 to 15, further comprising:
sending third information, wherein the third information is used to indicate that configuration information in the second information is used for 3-antenna-port transmission.

17. The method according to any one of claims 11 to 16, wherein the at least one channel sounding reference signal resource comprises any one of: 3 single-port channel sounding reference signal resources; 2 two-port channel sounding reference signal resources; 1 two-port channel sounding reference signal resource and 1 single-port channel sounding reference signal resource; and 1 four-port channel sounding reference signal resource.

18. The method according to any one of claims 11 to 17, wherein the precoding matrix is selected from a candidate precoding matrix set, and the candidate precoding matrix set comprises at least one of: $\left\{\frac{1}{\sqrt{3}}\left[\begin{matrix}1 \\ 0 \\ 0\end{matrix}\right], \frac{1}{\sqrt{3}}\left[\begin{matrix}0 \\ 1 \\ 0\end{matrix}\right], \frac{1}{\sqrt{3}}\left[\begin{matrix}0 \\ 0 \\ 1\end{matrix}\right], \frac{1}{\sqrt{3}}\left[\begin{matrix}1 & 0 \\ 0 & 1 \\ 0 & 0\end{matrix}\right], \frac{1}{\sqrt{3}}\left[\begin{matrix}1 & 0 \\ 0 & 0 \\ 0 & 1\end{matrix}\right], \frac{1}{\sqrt{3}}\left[\begin{matrix}0 & 0 \\ 1 & 0 \\ 0 & 1\end{matrix}\right], \frac{1}{\sqrt{3}}\left[\begin{matrix}1 & 0 & 0 \\ 0 & 1 & 0 \\ 0 & 0 & 1\end{matrix}\right]\right\}$ .

19. The method according to any one of claims 11 to 18, wherein the second indication information comprises: a number of layers and a transmitted precoding matrix indicator, and the precoding matrix is determined according to the number of layers and the transmitted precoding matrix indicator jointly.

20. The method according to any one of claims 11 to 19, wherein a power scaling factor of the physical uplink shared channel is a ratio of a number of non-zero-power antenna ports for sending the physical uplink shared channel to 3.

21. A communication apparatus, comprising:
a receiving module, configured to receive first information, wherein the first information comprises first indication information and/or second indication information, the first indication information is used to determine at least one channel sounding reference signal resource, and the second indication information is used to determine a precoding matrix; and
a sending module, configured to send a physical uplink shared channel by using 3 antenna ports according to the precoding matrix, wherein the 3 antenna ports are antenna ports used to send the at least one channel sounding reference signal resource.

22. A communication apparatus, wherein the apparatus comprises:
a sending module, configured to send first information, wherein the first information comprises first indication information and/or second indication information, the first indication information is used to determine at least one channel sounding reference signal resource, and the second indication information is used to determine a precoding matrix; and
a receiving module, configured to receive a physical uplink shared channel, wherein the physical uplink shared signal is sent by using 3 antenna ports according to the precoding matrix, and the 3 antenna ports are antenna ports used to send the at least one channel sounding reference signal resource.

23. A computer-readable storage medium, wherein the computer-readable storage medium is a non-volatile storage medium or a non-transitory storage medium, on which a computer S program is stored, and when the computer program is run on a computer, steps of the method according to any one of claims 1 to 20 are performed.

24. A communication apparatus, comprising a memory and a processor, wherein a computer program executable on the processor is stored in the memory, and the processor, upon executing the computer program, performs steps of the method according to any one of claims 1 to 20.
